# EUROPEAN PATENT SPECIFICATION

(11) **EP 3 302 749 B1**
(45) Date of publication and mention of the grant of the patent: **16.11.2022**
(21) Application number: 16729159.0
(22) Date of filing: 01.06.2016
(51) Int. Cl.: B01D 24/00, B01D 24/14, B01D 24/46

(54) **MULTILAYER MEDIA BED FILTER WITH IMPROVED BACKWASH**
MEHRSCHICHTIGER MEDIENBETTFILTER MIT VERBESSERTER RÜCKSPÜLUNG
FILTRE À LIT DE MILIEU MULTICOUCHE AVEC LAVAGE À CONTRE-COURANT AMÉLIORÉ

(30) Priority: 02.06.2015 US 201562169807 P
(43) Date of publication of application: 11.04.2018
(73) Proprietor: Neptune Benson, Inc., Coventry RI 02816 (US)
(72) Inventor: SILVERWOOD, Alain, St-Eustache, Québec J7R 6W2 (CA); BOSISIO, Marco, Sherbrooke, Québec J1L 2Y8 (CA)
(74) Representative: Murgitroyd & Company
(86) International application number: PCT/US2016/035216
(87) International publication number: WO 2016/196594

(56) References cited:
- GB-A- 610 412
- US-A- 293 745
- US-A- 4 668 405
- US-A- 5 292 436

## Description

### Technical Field

The present application relates to the field of multi-layer media bed filter backwash methods and apparatus, and in particular to micromedia multi-layer media bed filters.

### Background

Multi-layer media bed filters are well known in the art. GB 610 412 A refers to a known rapid gravity sand filter and a process of back washing said sand filter. US 5 292 436 relates to an apparatus for upflow filtering through the use of a casing defining a chamber of variable cross-sectional area along the length thereof, whereas US 4 668 405 relates to a downflow filter with high velocity backflush. In Applicant's International PCT patent application publication WO2014/012167 published 23 January 2014, there is described a variety of media bed filters for filtering fine particles, including configurations that are adapted to improve filtering performance using a top layer of microsand by providing suitable flow properties at the surface of the media. An advantage of such flow properties is an increase in the ability of the media to collect fine particles without blockage.

Such improved performance leads to a heightened need to remove trapped particulates and other contaminants during regular backwash. In the case of microsand having trapped contaminants deeper within the microsand layer prior to experiencing a reduced performance, removal of contaminants by backwash within the microsand media is more challenging.

In conventional backwashing to remove contaminants collected by the filter, and thus to allow the filter to continue filtering raw fluid with good efficiency, a flow of liquid is provided in the reverse direction of the filter. The liquid backwash typically fluidizes the media bed and sends filter media granules and contaminants into a suspension within the filter chamber, with a separation of media and liquid happening before discharge. The backwash flow is then reduced to allow the filter media to resettle and stratify correctly, if possible.

In the case of microsand, the separation of contaminants from the microsand is a challenge because the small particles of media are kept in suspension under relatively low liquid flow rates. Under these conditions, the flow can be less effective at removing contaminants from the media.

Media decontamination is also known to be performed using air. Air backwashing can be more effective at cleaning than liquid backwashing. In this case, a liquid level above the media can be lowered, and air can be introduced below the media to force liquid and air through the media bed, thus causing media to be mixed and propelled into the liquid above the media bed. Air then escapes from the top of the filter reservoir, while the liquid above the media bed is filled with a mix of contaminants and media. The media in suspension is then restratified to return to the normal media bed. This can be achieved by controlled liquid flow up through the suspended media to cause deposition of the media sorted by particle size. The contaminants in the liquid above the media bed can be flushed away.

In the case of microsand filter bed media, an air backwash is a problem. While the air can be used effectively to wash the media, restratification that is achieved using controlled flow rates for larger media is a problem given the much lower flow rates involved to suspend the microsand.

### Summary

The invention is set out in the appended claim 1. Preferred features of the invention are set out in the dependent claims. "Micromedia" as used herein is defined to mean a fine filtering media of an effective diameter less than 0.40 mm, and down to about 0.20 mm and preferably down to about 0.10 mm, and the material can be silica sand, glass, plastic, quartz, gravel, metal, ceramic, etc. By effective diameter, it is understood that there can be a range of diameters for a given media, and that the effective diameter can be an average diameter. For example, in the case of microsand, an average diameter of 0.22 mm might have particles that vary from 0.12 mm to 0.35 mm. In the case of glass or polymer media, particle sizes may have a narrower range. Such media is effective in trapping fine contaminants in the range of 0.5 to 20 microns.

Applicant has discovered that a multi-layer media bed filter having a micromedia surface and an increasing density of media from the finest media on the top to the coarsest media on the bottom can be efficiently backwashed using air without significantly disrupting stratification of the media layers. The use of air for this backwash removes contaminants from the micromedia into the liquid level above and around the micromedia. When the air is stopped, the contaminants in the liquid above the micromedia that were removed by the airflow are flushed away either with liquid injected above the media or by a liquid flow through the media that does not remove the micromedia. The amount of contaminants that are released from the micromedia with the stratification-maintaining air backwash is significantly greater than when using liquid backwash alone, whether the liquid backwash uses a flow rate sufficient to suspend the micromedia or below a suspending flow rate.

Applicant has further discovered that a media bed filter having a raw liquid flow through nozzles that create flow along a top surface of the media bed, without adverse displacement of the media, can be used during a backwash cleaning cycle to remove contaminants from the surface of the media bed with good efficiency. Typical filters would be unable to dislodge contaminants from the surface of the micromedia media bed using the raw fluid inlet nozzles without risking sending the micromedia into the flow and losing micromedia to the backwash. Such a use of the raw inlet nozzles is useful at a beginning of a backwash cycle. Additionally or alternatively, such a use of the raw inlet nozzles is useful following an airflow backwash that has brought contaminants into a liquid level above the media bed.

### Brief Description of the Drawings

The invention will be better understood by way of the following detailed description of embodiments of the invention with reference to the appended drawings, in which:
Figure 1 shows a typical prior art deployment of a media bed filter within a filtration tank.
Figure 2 shows a typical prior art deployment of a media bed filter within a filtration tank that shows captured particulates and a crust caked at the top of the media bed.
Figure 3 shows a prior art deployment illustrating a liquid backwash operation with a sand filter media bed within a filtration tank using a gentle water flow.
Figure 4 shows a prior art deployment illustrating a backwash operation with a sand filter media bed using an airflow.
Figure 5 shows an embodiment installation of a media bed filter within a filtration tank not according to the invention comprising a layer of micromedia media at the top of the media bed with captured particulates and a caked crust atop the media bed following operation of the filter.
Figure 6 shows an embodiment not according to the invention of an improved backwash procedure wherein a limited flow of air results in a micromedia cloud occupying only a very narrow zone within the water layer and immediately above the media bed, showing concomitant flow of contaminants from the micromedia media.
Figure 7 shows an embodiment of a nozzle- and baffle-based liquid skimmer to perform a skimming action of caked crust accumulated at the top of a media bed.
Figure 8 shows an embodiment of a media bed filter unit a partial cross section illustrating the horizontal cylindrical tank having four nozzle and baffles for liquid inlet and having a bottom cylindrical screen for the filtered liquid outlet and the backwash inlet, the filtering media not being shown for clarity.

### Detailed Description

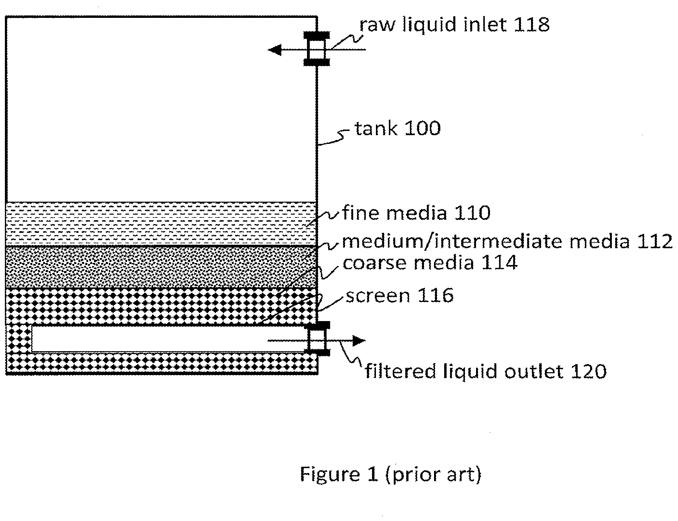

Figure 1 illustrates a typical disposition of sand media within a multi-layer media bed filter, deployed within a tank 100. The media bed has varying density of media as known in the art. In such filters, the finest media 110 typically occupies the topmost layer, with one or more intermediary stages 112 of increasing coarseness as one descends through the various layers vertically disposed within the tank 100. Accordingly, the coarsest media 114 typically occupies the bottom-most layer that is supported by a screen. In some cases, the media 114 rests on a bottom of the tank 100 and the screen is associated with the outlet 120.

It will be appreciated that precise definitions for fine, intermediate, and coarse media for each of the various layers to implement may vary in accordance with various factors, which non-limitingly include area of practice, industry, deployment requirements, and government regulation. However, for purposes of contextual comparison, one may consider one or more physical properties such as media density or media diameter as a selection of characteristics by which to distinguish the various layers of media within a tank 100. For example, gravel or sand having a density of 2.7 g/mL may be desired to implement a coarsest and bottom-most layer, activated carbon with a density between 2.0 g/mL and 2.1 g/mL may implement an intermediate layer, while anthracite having a density ranging between 1.45 g/mL and 1.75 g/mL may implement a finest and topmost layer. Additional possibilities and characteristics for materials are further enumerated herein.

### BASIC DISPOSITION OF MEDIA AND OPERATION PRINCIPLES

Owing to the granulated textural nature of sand, individual layers of the various media are each neither typically disposed within nor delineated by finely defined by specific boundaries. Distribution of media having various grain sizes within a tank 100 is thus approximate and typically follows a gradual transition from top to bottom of each layer. In addition to shifting effects due to filtration and potentially other operations, it will be appreciated that achieving perfect stratification of media layers by particle size is typically even more elusive in some implementations because of ranges, variations and tolerances in particle size, density, and coarseness of media within each otherwise potentially distinguishable layer. Thus a non-absolute boundary often in the form of an intermediate taper region may separate the various stratifications of media. Yet despite the non-ideal disposition of sand particle sizes, even an imperfect stratification is instrumental in ensuring that sand media is not inadvertently lost, whether in the course of filtration operations or at any other time.

Following introduction of sand of various sizes into the tank 100, approximate stratification is achieved by reversing the regular flow of fluid within the tank 100. Doing so causes smaller sand particles to become suspended, with successively smaller media 110 floating to the top of the tank and coarser media 114 toward the bottom. As a result, the finer particulate media 110 that settles toward the top of the sand and water mix and does not impede the operation of the fine screen 116 further discussed herein.

The finer media 110 works to capture deposits of very fine particulates, with successively coarser layers 112, 114 serving to prevent the finer sand 110 from being flushed out of the tank 100 along with the filtered liquid or, alternatively from creating an excessive build-up of resistance for the filtered liquid to pass through the extremely fine screen 116. The role of the sand media in mechanically absorbing the particulates is known in the art and will be only briefly described herein; likewise the role of the screen 116 in avoiding clogging the area immediately upstream from the filtered liquid outlet 120, as well as notions of gradually and successively increasing the porosity of media 110, 112, 114 as fluid trickles toward said screen 116, are understood.

Raw liquid to be filtered is introduced into the tank 100 via a raw liquid inlet 118. It will be appreciated that said raw liquid may come from any source. Its nature may therefore vary in accordance with the environment in which the filtration tank is deployed, as well as with specific filtration objectives. Thus, raw liquid input 118 need not necessarily comprise raw sewage, but may simply consist of but industrial water used for such purposes as cleaning, as for example, from an industrial process. Alternatively, cooling water containing dust and trace amounts of bacteria may be introduced from an HVAC system.

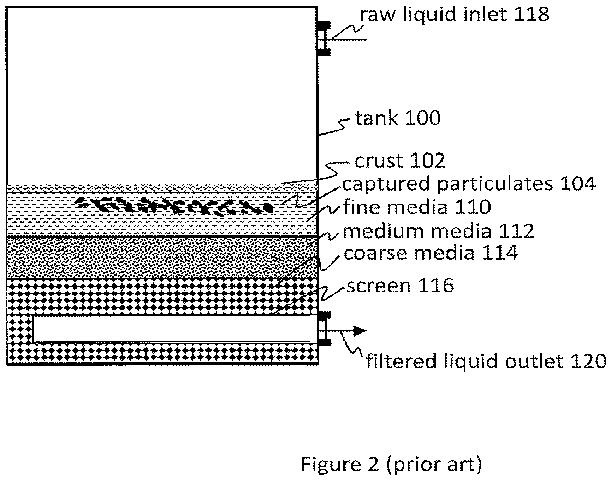

Deposits of contaminants, particularly those sized in excess of the coarseness of the fine media 110 are thus captured by the latter 110 on or above the surface of the media bed, as illustrated in Figure 2, with further travel of said contaminants through the media bed being thereby impeded. A cake or crust 102 may form at the surface of the media 110. Other contaminants, either similarly or comparably sized to the granularity of the fine media 110 layer, may penetrate or have the top of layer 110 prior to an advanced consolidation of the crust 102 and be trapped or captured as particulates 104 within a certain distance of travel through said layer. It will be appreciated that contaminants not trapped within the first layer are unlikely to be trapped in any subsequent layer comprising successively coarser media.

A filter having a structure essentially similar to the one described above may operate in accordance with a specific schedule or for a specified time period until its efficient operation becomes impeded by a buildup of contaminants, whether as a crust 102 formed above the media bed or as a collection of captured particulates 104 within the finer media 110 layer. Continuing to introduce raw liquid 118 into the filter subsequent to an excessive a build-up of captured contaminants typically results in hampered and inefficient operation. A filter maintenance procedure known as a backwash is typically resorted to when such an encumbering condition is reached. Such a condition can also be detected using the pressure drop across a filter that will increase over time as the filter becomes clogged with contaminants.

### CONVENTIONAL LIQUID FLUID BACKWASH IN A CONVENTIONAL SAND FILTER

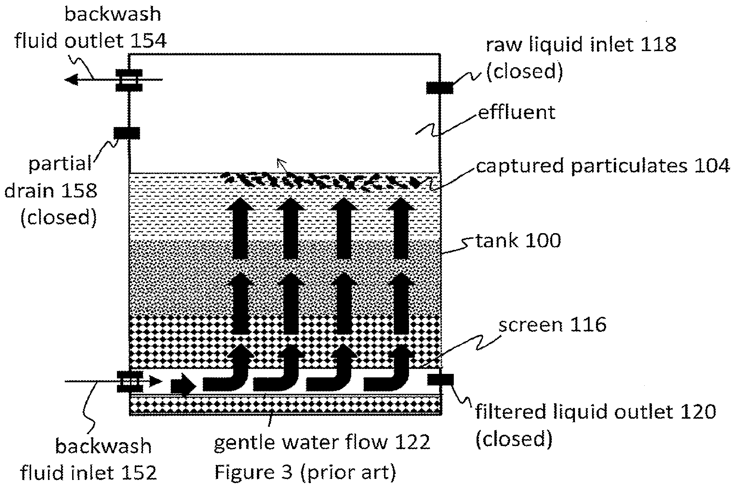

As discussed above, reversal of the regular flow of fluid within the tank 100 is useful to achieve stratification (or restratification) of the various sand (or other granular material) media. In certain deployments, this may be accomplished by way of a backwash procedure. A backwash can involve (see Figure 3) flowing clean liquid from the outlet side of the screen (inlet 152) up through the media to a backwash outlet 154. Gentle flow 122 can readily remove deposits on the top of the media, however, the ability to remove trapped deposits within the fine media is limited by a gentle flow. The media typically requires "washing" namely a mechanical action, with or without additive agents to help remove contaminants. One type of such action is to provide a liquid flow to put the media into partial suspension. This avoids the need for a mechanical agitator.

Less gentle flow may be used in the course of a conventional backwash operation.

Reversing the flow of fluid from the one followed during typical filtering operation in a more vigorous fashion 124 causes a temporary lifting of media from their usual positions and dispositions within the tank 100.

Counterflow flushing should be done with a flow rate 124 sufficient to impart kinetic energy upon media so that the latter does not achieve full suspension within a sand-water mix, and the suspension resulting when the comparatively finest media 110 floats above the successively coarser media 112, 114. It will be likewise appreciated that the aforementioned flow rate must not let the finest media 110 be flushed out and lost as part of any sand-water quantity escaped via a backwash outlet.

### CONVENTIONAL AIR FLUID BACKWASH IN A CONVENTIONAL SAND FILTER

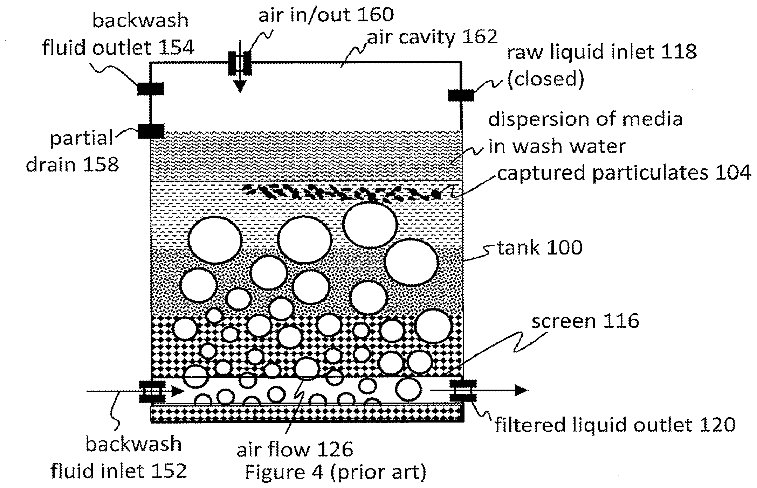

A related backwashing process known in the art involves flushing in counterflow using air and a liquid (see Figure 4). In addition, some sand filter deployments may implement both liquid- and air-based backwashed procedures. It will be appreciated, however, that dual backwash deployments may not typically implement both backwash variants simultaneously.

During regular filtration operation, the tank 100 is typically filled with liquid to be filtered, with various sand media approximately and successively stratified in the manner discussed above. An air backwash proceeds after first interrupting the operation of the filter. The level of liquid in the tank 100 is then lowered, typically by draining said liquid via the filtered liquid outlet 120. A level sensor may be used to detect when the water level in the tank 100 has been lowered to an acceptable height for this purpose. The aforementioned level lowering may likewise proceed through the introduction of a quantity of air via an air inlet/outlet 160 such that an air cavity 162 within the tank 100 is created and a corresponding volume of liquid is forced out. Air may be introduced from any suitable source, such as a pump or air compressor. Once the air cavity 162 has been created and the relative fluid level in the tank 100 dropped to a sufficient level, unnecessarily open inlets and outlets (including without limitation the filtered liquid outlet 120) may be temporarily sealed and cleaning of the sand media itself may commence.

To clean the sand media, air flow 126 is introduced into the tank in a manner that results in a turbulent cycling or mixing of sand akin to that described for the liquid backwash above. Likewise, such turbulence is sought with a view to replicate the suspension-creating action seen with the liquid backwash but without any risk of flushing media out of the tank 100. To do so, backwash fluid - in this case typically air - is thus introduced through the backwash fluid inlet 152, causing within short order a diffusion of bubbles 170. It will be appreciated that the air circulation thus effected implements an inexpensive and efficient mechanical means by which to agitate the media. The mixing of media using air introduced through the backwash fluid inlet 152 implements an agitation akin to that implemented by an agitator within a washing machine for clothing. Furthermore, the advantageous use of air-based circulation to randomize the sand media granule diameter and density, as opposed, for example, to implementing stirring via a mechanical arm or motorized paddle will be apparent to those seeking to maximize unobstructed and unhindered access to the tank 100 by limiting the cost and physical drawbacks of additional mechanical parts as well as additional hindrances to accessibility.

Not illustrated in Figure 4, the fine and medium media 110 and 112 are essentially homogenized due to the air backwash action. In some cases, the coarse media can also be brought into the suspension. The homogenized media can be separated or stratified by using a liquid backwash process as described below, so as to restore the media stratification.

### DETERGENT / CHEMICAL CLEANING AGENT TO ASSIST CLEANING

Some implementations known in the art implement backwashing - whether the liquid- or air-based variant - with the possibility of simultaneously using a cleaning and/or clarifying agent to variously initiate, facilitate, or promote flocculation in the course of said backwash operation.

In a manner akin to using soap while doing laundry, an operator may select his choice of cleaning agent in addition to backwash variant. As soap removes grease and stains from clothing fibers, a flocculating agent or surfactant may remove flocs, or particles and contaminants from sand media in the course of the turbulence created by the liquid- or air-based agitation operation described above.

### LIQUID BACKWASH TO FOLLOW AIR BACKWASH

It will be appreciated that upon completion of an air-based backwash, the homogenized media inside the tank 100 could resettle in a mixed state, with the approximate stratification of media layers by coarseness as described above and desired for operation of the filter being largely absent. A liquid backwash is used (or some other intervention to stratify the media), subsequent to an air-based backwash, to ensure restratification of the variously sized sand media. As discussed previously, the rate of counterflow for the latter liquid backwash may be adjusted to ensure both propulsion-based restratification as well as containment of sand media. On the one hand, the flow rate must thus be adequately selected to ensure that it is strong enough to propel smaller sand particles to their respective higher points within the tank 100, while leaving coarser ones at respectively lower parts of the media bed. On the other hand, the flow rate must not be so strong as to inadvertently flush sand media from the tank 100 altogether.

### MICROMEDIA

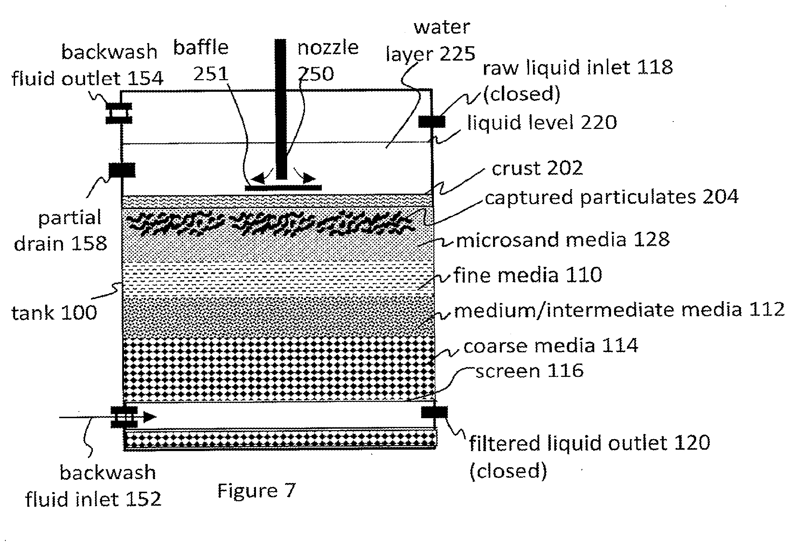

Sand media particles may be classified, in a manner similar to other soil textures, within specific ranges of sizes in accordance with various criteria. Such criteria may non-limitingly be defined, as a function of area of technology, governing legislation, and/or field of practice. Microsand is a subcategory of sand, into which media particle sizes may fall into an even lower range. Accordingly, microsand may be used (Figure 7) within the media bed to advantageously implement a still finer filter layer 128, rendering possible the capture of particulates whose size is concomitantly smaller. A class of previously unfilterable contaminants, such as living organisms, may thus be captured, in some cases rendering previously unpotable water potable. While no single precise technical definition of "microsand" exists, "micromedia" is defined above to mean a fine filtering media of an effective diameter less than 0.40 mm, and down to about 0.20 mm and preferably down to about 0.10 mm, and the material can be silica sand, glass, plastic, quartz, gravel, metal, ceramic, etc., and the term "microsand" may be appreciated as encompassing any filtering sand or granular media having both size and filtering properties superior to the finest particle media known and used in the art. A selection of possible size ranges for (and composition of) such media are provided textually and in tabular form herein.

### MICROMEDIA DISADVANTAGES

Unfortunately, disadvantages also exist in implementing ever smaller filter layers using micromedia (e.g. at the topmost layer of a filter). Smaller pore sizes typically result in disadvantages affecting both the operation and maintenance of existing filtration systems.

### PROBLEM: MICROMEDIA PRECOCIOUS CRUSTING

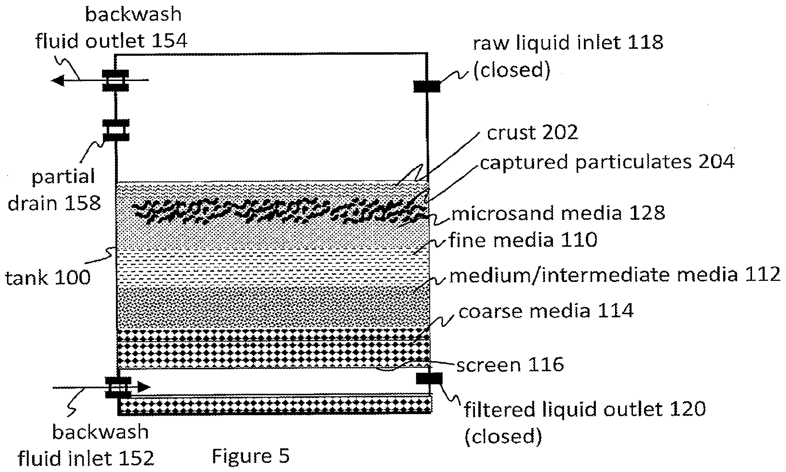

It will be appreciated that with the decreased pore size of the topmost layer of the media bed, greater pressure, for instance, is required to force raw liquid through a filtration tank containing micromedia. Additionally, a greater number of contaminants may become trapped at or within part of a top most layer comprising micromedia 128 than with prior art systems whose finest layers comprise relatively coarser media. The greater number of contaminants thus trapped per comparable time period more frequently or rapidly obstructs the flow of raw liquid through the filter system. Preventing formation of the crust and a buildup of contaminants within a portion of the topmost layer is likewise operationally important. As the buildup of a crust 202 (see Figure 5) and particulates 204 advances, the porosity initially afforded by the use of micromedia decreases rapidly, requiring increased pressure for continued (albeit impeded) operation. Accordingly, filtering performance is impaired to a degree far greater than a conventional sand filtration system whose finest media is coarser. Thus, the need for backwash cleaning becomes more frequent in the case of a micromedia filter over a regular sand bed filter.

### PROBLEM: MICROMEDIA BACKWASHING

The finer nature of micromedia introduces a corresponding range of sand particles that may be put into suspension far more easily than their larger counterparts discussed previously for a conventional liquid backwash. As a result, a more vigilant management of acceptable ranges for inlet 118, 152 flow currents is required. Additionally, deployment personnel and operators (or automated control systems) must ensure that a flow rate strong enough to achieve suspension of sand media is applied at the backwash fluid inlet 152 without likewise expulsing sand (from a slurry comprised of a sand and water mix analogous to that encountered conventionally 105) from the backwash fluid outlet 154. This typically implies a range of backwash inlet 152 liquid flow rates that is much more restrictive (and inferior both in quantity and respective performance) to those seen in filtration system implementations in which micromedia layers are absent. Lower usable backwash fluid inlet flow rates likewise impair a maintenance operator's ability to properly clean the sand media. Thus, while flow rates acceptable for use with conventional sand allows an acceptable level of cleaning to be achieved for that class of filtration systems, the significantly lower flow rates acceptable for use when micromedia is present as a filtering medium are in most cases pose such a constraint as to render backwashing with such media nearly useless. Lower ranges of acceptable flow rates are due to the fact the much smaller micromedia particles present may be easily lost via expulsion from the tank 100 even when significantly lower flow rates of backwash fluid are used at inlet 152. Poor cleaning of sand media such as may result from the mixing of sand of all types present within a tank 100 in the course of a backwash may have compounding deleterious effects.

Even following restratification, sand media that resettles following backwashing (with a backwash current sufficiently low as to not expulse sand particles of the microsand range) a quantity of contaminants present from the previously processed raw liquid will remain. The net effect of incorporating micromedia into the media bed - with the cleaning properties resulting from its porosity - can thus result in an ironic degradation of a filtration system's overall effectiveness.

Additionally, a liquid-only backwash, especially in the case of micromedia, does not result in effective cleaning of the media bed. Applicant performed a first trial using a tank in which micromedia comprised the finest filtration layer. Two 10-minute backwash cycles (which included a filtration cycle to clean out system to ensure that no residue remained) were performed, with the applicant observing that the cleaning process resulted in wash water having a measured peak turbidity of 5 nephelometric turbidity units (NTU), suggesting that the media was cleaned. Analysis of the surface media showed that kaolin was still trapped in the media that demonstrates that the wash was not effective. Subsequent observations are further described herein.

Just as is the case with liquid-based micromedia backwash procedures, applying conventional air-based backwash procedures for filtration systems in which micromedia is a filtration medium are likewise problematic and impaired by physical considerations.

A conventional air backwash has as its objective collecting a slurry of moistened sand particles 105 and soiled washwater 140. Once air bubbling ceases, the sand (or media) settles down. Clean water may then be introduced through the backwash fluid inlet 152 to flush the soiled water out.

Settling of slurry when micromedia 128 is present within filtration media occurs at a rate significantly slower than when micromedia is absent, resulting in comparatively longer settling times for the micromedia. More importantly, the air scouring causes the micromedia to homogenize with the coarser supporting media, with the result that micromedia would be remain mixed with coarser media following the air scouring. This could lead to loss of micromedia into the lower supporting media and/or outlet. Destratification is thus required. As described above, destratification of micromedia and its lower supporting media is a problem. Furthermore, the settling process with micromedia present concentrates a greater number of contaminants into that topmost layer as settling takes place. Thus, even a regular air backwash fails when micromedia is present. An improved air backwash procedure may be accordingly contemplated - one in which the intensity and turbulence of bubbling provides sufficient effect without overly perturbing filtration media, all while effecting a separation of contaminant from filtration media.

### MICROMEDIA BACKWASH SOLUTION

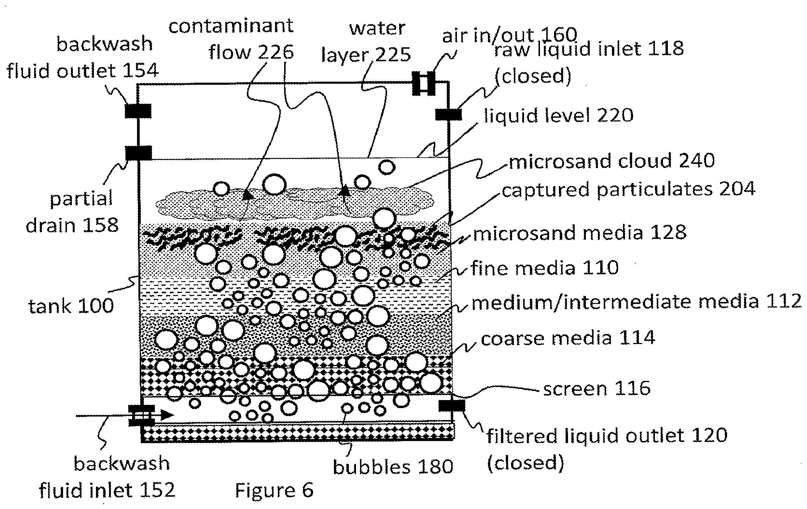

The solution proposed by applicant, as shown in Figure 6, involves the use of a micromedia having a density that is less than the density of at least the next smallest particle size in the filter bed media. The liquid flow rates used in regular filter bed media stratification are simply too high for micromedia. Applicants have found that the layers of the media can remain stratified during an air backwash, as long as the density of the media increases with particle size so as to help with stratification and the air flow is controlled so as not to create mixing. During this air backwash, the lower layers of the media are not disturbed, and the micromedia can remain in a liquid suspension above lower layers. A low-level liquid backwash flow can be combined, as long as the liquid flow does not cause micromedia to be flushed out of the reservoir. The higher density also helps keep the micromedia separated from the larger particle size media during stratification, and thus prevents micromedia from being trapped into the rest of the media. When the air and liquid backwash is stopped, the micromedia is on top of the remaining stratified media.

In embodiments, the air flow rate may typically vary between 40 m³/m²/h and 55 m³/m²/h, for example for 0.15 mm microsand a flow rate of 55 m³/m²/h is suitable, even though a flow rate up to 60 m³/m²/h may be desired when mixing larger filtration media for specific applications with larger particles or for particulates having greater adhesion properties, for instance. The air can be injected through the fluid inlet 152 or a different inlet. An air flow controller (not shown) can be provided to set the desired air flow, for example a rotameter or a mass flow meter or a pitot tube meter can be used to control the air flow. Air distribution can be achieved using screen 116 or using a diffuser (not shown). The latter air flow results in bubbling (i.e. it causes air bubbles 170 to move within the media bed) that causes the micromedia to mix with the liquid (e.g. clean water) layer 225 whose level 220 reaches a comparatively significant height above the top of the media bed. The micromedia would be homogenized with the fine media 110 and possible the medium media 112 when the air flow is high.

However, media 110 and 112 remain stratified while micromedia 128 is suspended in the water layer 225. As described above, a small liquid flow (for example, one that raises the level 220 temporarily closer to outlet 154) can also be used to keep micromedia cloud 240 and the micromedia 128 separated from the fine media 110.

As the bubbles 170 push upward into the water layer 225 within the tank 100, a counter current of water flows downward without creating a powerful through-flow seen in conventional air backwashing. This action thus operates an overall flow exchange wherein contaminants gradually flow upward 226 from the media bed and are accordingly collected into the water layer 225 between the liquid level 220 and the top of the media bed. The bubbling 170 action causes contaminants either adhering to or caught between micromedia particles to be lifted into the water layer 225. As a result of this flow exchange, contaminants collected in the water layer 225 are not trapped back into the micromedia layer of the media bed when the air is stopped. Instead, once the contents of the media bed are determined to be clean, a slow flush of the soiled contents mixed within the water layer 225 is done. While this flow rate is in practice not imperceptible, it is important to ensure that the flow rate at which this flushing occurs be gentle enough as to not upset the topmost (micromedia) layer 128 of the media bed and in so doing upset the overall stratification required by the filter. According to an embodiment of the present invention, the contaminants collected in the water layer 225 following restratification are done from the top of the media only, namely by injecting clean water through an inlet, for example using the raw fluid inlet nozzle 250 (see Figure 7), and flushing contaminated water out through outlet 154.

It will be appreciated that the use of lower-density micromedia for the topmost layer of the media bed, with increasing densities for successively bigger particles, prevents de-stratification of layers when the air backwash operation ends. The air bubbles 170 and the current that they produce do not work to upset or otherwise destratify the layers of the media bed.

Thus, the air backwash scouring causes little movement in the bottom supporting media that is coarsest, but can disturb and cause homogenization of the micromedia 128 and the coarser media (fine media 110) that supports the micromedia. To avoid any significant disturbance of the media, following the air backwash, the micromedia separates from and settles on top of the coarser media. This is achieved primarily by selecting a higher density for the coarser supporting media than for the micromedia. The addition of a low level reverse flow of liquid at the end of the air scouring can also help in separating the micromedia from the coarser supporting media during the settling process. This reverse flow need not put at risk any loss of micromedia through the top of the filter. Also, the air flow in the backwash can be reduced so that the fine media 110 can settle while leaving the micromedia 128 to be suspended above. Then when the air flow is arrested, no mixing between the micromedia 128 and the fine media 128 takes place. Thus restratification is avoided without loss of micromedia.

The following table shows possible values for the various media layers for embodiments:

| Layer | Possible material | Diameter or range (mm) | Layer thickness (mm) | Media density (g/mL) | Height range from bottom of tank (mm) |
|---|---|---|---|---|---|
| Filtering | Microsand | 0.15 | 8" (203.2) | 2.6 to 2.7 | 19" (482.6) |
| | glass bead | 0.2 to 0.3 | 8" (203.2) | 2.5 | 19" (482.6) |
| | glass bead | 0.3 | 8" (203.2) | 2.5 | 19" (482.6) |
| | plastic granule | 0.6 | 8" (203.2) | 1.6 | 19" (482.6) |
| Intermediate | high-density ceramic | 0.7 to 1.2 | 6" (152.4) | 3.8 to 4.0 | 11" (279.4) |
| | Garnet | 0.7 to 1.2 | 6" (152.4) | 4.0 to 4.1 | 11" (279.4) |
| Bottom | Garnet | 3 to 6 | 5" (127) | 4.0 to 4.1 | 5" (127) |

In a second trial immediately following the first one described herein, Applicant carried out an air-based backwash. This trial involved a filter of 68 m3/h (300 gallons per minute) capacity was delivered at an industrial site of South-Dakota, USA. The plant was in need of good quality water to feed a reverse osmosis (RO) system. The plant was using ultra-filtration (UF) membranes in front of the RO system. It had been observed that the UF membranes were fouling very rapidly, and could not be cleaned to recover their original flow. So, the microsand filter was contemplated to pre-treat the water before the UF membranes to improve the filtrability of the water and to remove some of the suspended solids load going to the UF membranes.

Two source of water were used, one coming from a lake with about 15 to 30 NTU of turbidity, and the second coming from a pond with about 100 NTU (up to 300 NTU) was measured; this pond had all the wastewaters of the plant diverted to it, so it could be recycled, and improve the water balance of the plant.

Because of the influent concentration is solids, the filter was operated at about 45 m³/h (200 gpm) to optimize the filter removal performance.

The filter was put into operation and because of the suspended solids concentration many water-only backwashes were triggered about every 2 hours. After two week of operation, the media differential pressure of 27.58 kPa (4 psi) could not be restored. In fact the filter media was fouled and could not be cleaned even after several water backwashes in a row. In this trial, a measured peak turbidity of 230 NTU was observed. This demonstrates that a large number of contaminants within the sand were present but not collected following the first backwash.

Then the pre-backwash air scour was put in operation, and after only two backwashes, the filter could recover its full cleanliness with a filtration differential pressure of 27.58 kPa (4 psi) at 45 m³/h (200 gpm). The filter was operated for about 12 weeks on a continuous basis with the same high load of organic suspended solids, and could retrieve its full capacity with a clean filtration pressure differential at 27.58 kPa (4 psi) every time.

In a further test, raw water having an NTU of 11.19 (this is light yellow) was analyzed using a Spectrex Laser Particle Counter to have a mean particle size of 2.98 micrometers (standard deviation of 2.51 micrometers) and total count of 93,947/mL. The micromedia filter outlet had an NTU of 1.98 (this is essentially clear) and was analyzed to have a total particle count of 27,155/mL with a mean particle size of 2.35 micrometers (standard deviation of 2.03 micrometers).

In this test filter installation, the filter reached a pressure drop of 117.21 kPa (17 psi) before backwash was started. Before backwash, the NTU differential was about 12 NTU, and following the air scour backwash as described above, the pressure drop became 41.37 kPa (6 psi) with the NTU differential increasing to about 13 NTU. This test was repeated when the differential pressure reached 137.90 kPa (20 psi) and the NTU differential was 21.4 NTU - 2.4 NTU = 19 NTU, for a differential pressure post-air-scour-backwash of 34.47 kPa (5 psi) with 21.3 NTU - 0.7 NTU = 20.6 NTU. This test was repeated again when the differential pressure reached 137.90 kPa (20 psi) and the NTU differential was 17.8 NTU - 2.4 NTU = 15.4 NTU, for a differential pressure post-air-scour-backwash of 27.58 kPa (4 psi) with 17.8 NTU - 1.1 NTU = 16.7 NTU.

It will be appreciated that the air backwash of the micromedia without disturbing the stratification allows for rapid removal of contaminants from the micromedia and thus less downtime of the filter during operation. Because the micromedia is more efficient at capturing contaminants of a size from 0.5 to 20 microns, more frequent cleaning of the filter may be required to maintain filtering efficiency, and such frequent cleaning is facilitated by the air backwash of media that has a density composition allowing for air backwash without loss of stratification of the filter media bed.

### FLUSHING SOILED WATER FOLLOWING BACKWASH

Soiled water is normally flushed by introducing clean water into the tank 100 via the filter bed. With micromedia, this flow rate must be very low so as not to force the micromedia into suspension and be flushed out. Therefore, an additional inlet above the filter media can be used. The raw liquid inlet 118 can be used if the flow does not disturb the micromedia. Likewise, flushing may be initiated by introducing clean water into the tank through the backwash fluid inlet 152 with an appropriately very gentle flow rate as to avoid creating a cloud (of micromedia 240 or of any of the media bed contents). Appropriate flow rates are likewise subject to slight variation and are in part determined by the diameter of the finest layer present within the media bed. A flow rate of 15 m³/m²/h may be suited when micromedia having a diameter of 0.15 mm is present. The flow rate may be slightly lower, e.g. 13 m³/m²/h, for glass beads having a diameter of 0.2 mm. Glass beads with a slightly larger diameter, say of 0.3 mm, as well as plastic granules with a diameter of 0.6 mm, may tolerate a flow rate of 25 m³/m²/h. It will be appreciated that directing clean water to the surface of the media bed from either inlet 118, 152 is an important first step, following which said water should be drained.

In an embodiment according to the invention (Figure 7), surface-directed nozzles 250 direct water exiting through a baffle 251 and may likewise be implemented for purposes of flushing away soiled water along with contaminants - especially large particulates - encrusted at the top surface of the media bed. Using one or more nozzles 250 directed with a baffle for backwashing in this way is a particularly effective way to clean the topmost layer of the media bed without inadvertently flushing appreciable amounts of sand from the tank 100. The baffle design works to implement a flow of water that performs a skimming action at the surface of the media bed.

In operation, the nozzle 250 and baffle 251 based liquid skimmer described above is typically run done before any other cleaning action is taken. Doing so provides the benefit of collecting crust 102, 202 or particulates 104, 204 collected atop the media bed. Collecting such top-level contaminants as a process step prior to any other routine media maintenance processes significantly and advantageously precludes the possibility of these contaminants settling into (or becoming trapped within) the topmost layer of micromedia following any subsequent backwashing process. Furthermore, contaminants may in this way be effectively dispersed from the top of the media bed without simultaneously introducing undue agitation or turbulence to the micromedia comprising the top of said media bed. Whereas the filter's normal flow rate during regular operation may reach 136 m³/h (600 gpm), the flow rate from the baffle may be roughly half of the filter's flow rate, peaking at approximately 68 m³/h (300 gpm).

In addition, the operation of the baffle is an improvement over mechanical agitators known in the art. Whereas agitators require and involve consideration of additional mechanical parts of particular complexity, operating the baffle is advantageous because it makes use of physical infrastructure already used in the filtering process. The lack of additional moving parts combined with compatibility with existing hardware are further advantageous qualities, all while improving upon the effectiveness shortcomings of conventional liquid backwashing.

A particularly advantageous effect of the solution described herein concerns the possibility and benefits it affords of avoiding frequent use of cleaning agents. Whereas a backwash is typically required on a timescale measured in minutes, hours, or days, the need to resort to adding a surfactant or flocculating agent may typically be obviated if not reduced to a single use on the order of several months. While needs of particular filtration system deployments differ widely, use of a detergent will typically be circumscribed to much rarer instances where an operator has reason to believe that the backwash solution described herein is not effective, and/or there exists a real need to clean the sand using said cleaning agent. In even rarer instances would the media bed contents altogether require replacing.

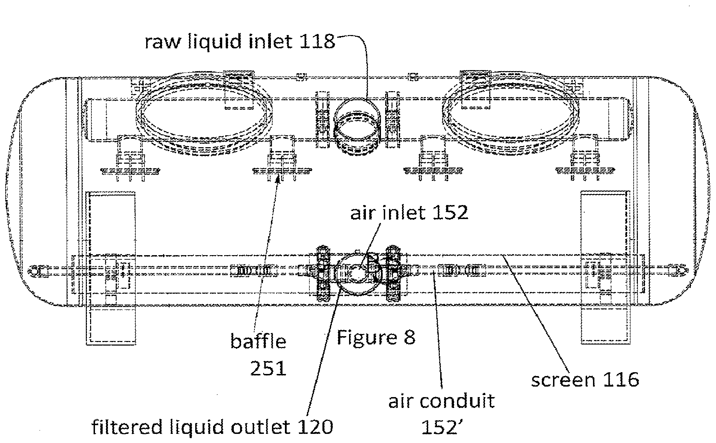

The descriptions of Figures 1 to 7 can relate to any desired geometry of tank 100. Figure 8 illustrates in cross-section a horizontally disposed cylinder according to another embodiment of the invention. Such an arrangement provides a large media surface in a compact arrangement. The liquid inlet 118 enters through a side port on the top of the tank through a T-joint to feeds a plenum with four nozzles delivering raw fluid to baffles 251. Any suitable arrangement for feeding the raw fluid into the tank can be used. The micromedia is, in this embodiment, provided near the baffles 251, such that the raw flow stimulates the micromedia to improve filtering performance. As an example, the media can comprise three types, namely the finest media on the top, a medium grain size in the middle and a coarse media at the bottom. Screen 116 is a cylindrical tube of mesh material in communication with an effluent outlet 120. The screen 116 can be closed on top and open at the bottom so as to collect filtered liquid from the bottom of the media. To the side of the screen 116 is an air distribution conduit 152' that bubbles in air at the level of the screen in the coarse media. The conduit 152' can surround the screen 116 and it can be near the boundary between the coarse and the medium media in the case of 3 grades of media. In this way, the delivery of air is separate from the evacuation of filtered liquid, however, it will be appreciated that in some cases, air could be injected for backwash purposes inside the screen 116. The lower media can also help to distribute evenly the air bubbles as they rise from conduit 152' toward the medium and fine media. As described above, the air backwash does not cause mixing of the micromedia with the coarser media such that restratification of the media is required.

## Claims

1. A media bed filter comprising:
a reservoir having a raw liquid inlet and a filtered liquid outlet (120), wherein the raw liquid inlet is fluidly connected to a raw liquid source;
stratified filtering media of varying size with a plurality of densities of granular material, **characterized in that**
the media bed filter includes an upper layer of micromedia (128) with an underlying granular material (110) of increasing density with particle size so as to facilitate an air backwash of the micromedia (128) without de-stratifying said media, and without requiring reclassification of the stratified media;
a backwash fluid inlet (152) for liquid and/or air and a backwash air distributor for injecting the air up through the filtering media
a backwash drain and
a controller for automatically controlling a liquid backwash and an air valve for injecting the air through the backwash fluid inlet (152);
wherein the raw liquid inlet comprises at least one surface directed raw liquid distribution nozzle (250) with a baffle (251) to define a liquid skimmer,
wherein the baffle (251) is provided parallel and near the upper surface of the topmost layer of the filtering media;
wherein the surface directed nozzle (250) is directed perpendicularly to the upper surface of the topmost layer of the filtering media and adapted to direct a raw liquid inlet flow exiting the nozzle (250) with the upper surface of the baffle (251) along and over a portion of the upper surface of the topmost layer of the filtering media to perform a skimming action and flush accumulations on the upper surface of the topmost layer of the filtering media without dispersion of the micromedia (128); and
wherein the backwash fluid inlet (152) is by means of the controller fluidly connectable to the raw liquid distribution nozzle (250) with the baffle (251) to flush said accumulations on the upper surface of the topmost layer of the filtering media without dispersion of the micromedia (128) to remove said accumulations out through the backwash drain;
wherein the micromedia has a density at least 1 g/mL less than a density of the underlying granular material; and wherein the stratified filtering media comprises an underlying granular material of diameter within the range of 2.5 to 6 mm, an intermediate layer of granular material of diameter within the range of 0.5 to 2 mm, and an upper layer of micromedia having an effective diameter of 0.1 mm to 0.4 mm.

2. The filter as defined in claim 1, wherein the micromedia (128) comprises sand granules.

3. The filter as defined in claim 1, wherein the micromedia (128) comprises glass granules.

4. The filter as defined in claim 1, wherein the micromedia (128) comprises polymer granules.

5. The filter as defined in any one of claims 1 to 4, further comprising a backwash air flow controller adjustable to set an air backwash flow rate effective to wash said micromedia (128) without de-stratifying said media.

6. The filter as defined in claim 1, wherein the top layer of micromedia (128) having an effective diameter of 0.1 to 0.2 mm.

7. The filter as defined in claim 1, wherein a density of the intermediate layer (112) is about 4 g/mL and a density of the top layer is less than 3 g/mL, preferably of a sand material having a density of about 2.7 g/mL or of a glass material having a density of about 2.5 g/mL or of a plastic material having a density of about 1.6 g/mL.

8. The filter as defined in claim 1 or 6, wherein the bottom layer (114) comprises garnet granules.

9. The filter as defined in any one of claims 1 to 8, wherein the backwash air distributor comprises a conduit (152') surrounding a screen (116) of the filtered liquid outlet (120).

10. The filter as defined in any one of claims 1 to 9, further comprising a controlled backwash air supply.

11. The filter as defined in claim 10, wherein the controller automatically controls a plurality of valves comprising at least the air valve to perform an air backwash cycle on the micromedia (128).

## Patentansprüche

1. Ein Medienbettfilter, der Folgendes beinhaltet:
ein Reservoir mit einem Rohflüssigkeitseinlass und einem Auslass (120) für gefilterte Flüssigkeit, wobei der Rohflüssigkeitseinlass fluidisch mit einer Rohflüssigkeitsquelle verbunden ist;
geschichtetes Filtermedium unterschiedlicher Größe mit einer Vielzahl von Dichten von granularem Material, **dadurch gekennzeichnet, dass**
der Medienbettfilter eine obere Schicht aus Mikromedium (128) mit einem darunterliegenden granulären Material (110) von mit der Partikelgröße zunehmender Dichte umfasst, um eine Luftrückspülung des Mikromediums (128) zu erleichtern, ohne das Medium zu entschichten und ohne eine Neuklassifizierung des geschichteten Mediums zu erfordern;
einen Rückspülfluideinlass (152) für Flüssigkeit und/oder Luft und einen Rückspülluftverteiler zum Injizieren der Luft nach oben durch das Filtermedium,
einen Rückspülablauf und
eine Steuerung zum automatischen Steuern einer Flüssigkeitsrückspülung und eines Luftventils zum Injizieren der Luft durch den Rückspülfluideinlass (152);
wobei der Rohflüssigkeitseinlass mindestens eine oberflächengerichtete Rohflüssigkeitsverteilungsdüse (250) mit einer Ablenkplatte (251) beinhaltet, um einen Flüssigkeitsabschöpfer zu definieren,
wobei die Ablenkplatte (251) parallel zu und nahe der oberen Oberfläche der obersten Schicht des Filtermediums bereitgestellt ist;
wobei die oberflächengerichtete Düse (250) lotrecht auf die obere Oberfläche der obersten Schicht des Filtermediums gerichtet ist und angepasst ist, um einen aus der Düse (250) austretenden Rohflüssigkeitseinlassstrom mit der oberen Oberfläche der Ablenkplatte (251) entlang und über einen Abschnitt der oberen Oberfläche der obersten Schicht des Filtermediums zu richten, um eine Abschöpftätigkeit auszuführen und Ansammlungen auf der oberen Oberfläche der obersten Schicht des Filtermediums ohne Dispersion des Mikromediums (128) auszuspülen; und
wobei der Rückspülfluideinlass (152) mittels der Steuerung mit der Rohflüssigkeitsverteilungsdüse (250) mit der Ablenkplatte (251) fluidisch verbindbar ist, um die Ansammlungen auf der oberen Oberfläche der obersten Schicht des Filtermediums ohne Dispersion des Mikromediums (128) auszuspülen, um die Ansammlungen durch den Rückspülablauf zu entfernen;
wobei das Mikromedium eine Dichte aufweist, die mindestens 1 g/ml weniger beträgt als eine Dichte des darunterliegenden granulären Materials; und wobei das geschichtete Filtermedium ein darunterliegendes granuläres Material mit einem Durchmesser im Bereich von 2,5 bis 6 mm, eine Zwischenschicht aus granularem Material mit einem Durchmesser im Bereich von 0,5 bis 2 mm und eine obere Schicht aus Mikromedium mit einem effektiven Durchmesser von 0,1 mm bis 0,4 mm beinhaltet.

2. Filter gemäß Anspruch 1, wobei das Mikromedium (128) Sand-Granulat beinhaltet.

3. Filter gemäß Anspruch 1, wobei das Mikromedium (128) Glas-Granulat beinhaltet.

4. Filter gemäß Anspruch 1, wobei das Mikromedium (128) Polymer-Granulat beinhaltet.

5. Filter gemäß einem der Ansprüche 1 bis 4, ferner beinhaltend eine Rückspülluftströmungssteuerung, die einstellbar ist, um eine Luftrückspülströmungsrate einzustellen, die wirksam ist, um das Mikromedium (128) zu waschen, ohne das Medium zu entschichten.

6. Filter gemäß Anspruch 1, wobei die obere Schicht aus Mikromedium (128) einen wirksamen Durchmesser von 0,1 bis 0,2 mm aufweist.

7. Filter gemäß Anspruch 1, wobei eine Dichte der Zwischenschicht (112) etwa 4 g/ml beträgt und eine Dichte der oberen Schicht weniger als 3 g/ml beträgt, vorzugsweise aus einem Sandmaterial mit einer Dichte von etwa 2,7 g/ml oder aus einem Glasmaterial mit einer Dichte von etwa 2,5 g/ml oder aus einem Kunststoffmaterial mit einer Dichte von etwa 1,6 g/ml.

8. Filter gemäß Anspruch 1 oder 6, wobei die untere Schicht (114) Granat-Granulat beinhaltet.

9. Filter gemäß einem der Ansprüche 1 bis 8, wobei der Rückspülluftverteiler eine Leitung (152') beinhaltet, die ein Sieb (116) des Auslasses (120) für gefilterte Flüssigkeit umgibt.

10. Filter gemäß einem der Ansprüche 1 bis 9, ferner beinhaltend eine gesteuerte Rückspülluftzufuhr.

11. Filter gemäß Anspruch 10, wobei die Steuerung automatisch eine Vielzahl von mindestens das Luftventil beinhaltenden Ventilen steuert, um einen Luftrückspülzyklus an dem Mikromedium (128) auszuführen.

## Revendications

1. Un filtre à lit de média comprenant :
un réservoir présentant une entrée de liquide brut et une sortie de liquide filtré (120), l'entrée de liquide brut étant fluidiquement raccordée à une source de liquide brut ;
du média filtrant stratifié de taille variable avec une pluralité de densités de matière granulaire, **caractérisé en ce que**
le filtre à lit de média inclut une couche supérieure de micromédia (128) avec une matière granulaire sous-jacente (110) de densité croissant avec la taille de particule de manière à faciliter un lavage à contre-courant par air du micromédia (128) sans déstratifier ledit média, et sans requérir de reclassification du média stratifié ;
une entrée de fluide de lavage à contre-courant (152) pour liquide et/ou air et un distributeur d'air de lavage à contre-courant pour injecter l'air vers le haut à travers le média filtrant
un drain de lavage à contre-courant et
un organe de contrôle pour contrôler automatiquement un lavage à contre-courant par liquide et une valve d'air pour injecter l'air à travers l'entrée de fluide de lavage à contre-courant (152) ;
où l'entrée de liquide brut comprend au moins une buse (250) de distribution de liquide brut dirigée vers la surface avec une chicane (251) afin de définir un écrémeur de liquide,
où la chicane (251) est fournie parallèle à et près de la surface supérieure de la couche la plus au-dessus du média filtrant ;
où la buse (250) dirigée vers la surface est dirigée perpendiculairement à la surface supérieure de la couche la plus au-dessus du média filtrant et conçue afin de diriger un écoulement d'entrée de liquide brut quittant la buse (250) avec la surface supérieure de la chicane (251) le long de et par-dessus une portion de la surface supérieure de la couche la plus au-dessus du média filtrant pour effectuer une action d'écrémage et chasser des accumulations sur la surface supérieure de la couche la plus au-dessus du média filtrant sans dispersion du micromédia (128) ; et
où l'entrée de fluide de lavage à contre-courant (152) est au moyen de l'organe de contrôle fluidiquement raccordable à la buse (250) de distribution de liquide brut avec la chicane (251) pour chasser lesdites accumulations sur la surface supérieure de la couche la plus au-dessus du média filtrant sans dispersion du micromédia (128) afin de retirer lesdites accumulations en les faisant sortir à travers le drain de lavage à contre-courant ;
où le micromédia a une densité inférieure d'au moins 1 g/mL à une densité de la matière granulaire sous-jacente ; et où le média filtrant stratifié comprend une matière granulaire sous-jacente dont le diamètre est compris dans l'intervalle allant de 2,5 à 6 mm, une couche intermédiaire de matière granulaire dont le diamètre est compris dans l'intervalle allant de 0,5 à 2 mm, et une couche supérieure de micromédia présentant un diamètre effectif allant de 0,1 mm à 0,4 mm.

2. Le filtre tel que défini dans la revendication 1, où le micromédia (128) comprend des granules de sable.

3. Le filtre tel que défini dans la revendication 1, où le micromédia (128) comprend des granules de verre.

4. Le filtre tel que défini dans la revendication 1, où le micromédia (128) comprend des granules de polymère.

5. Le filtre tel que défini dans n'importe laquelle des revendications 1 à 4, comprenant en sus un organe de contrôle d'écoulement d'air de lavage à contre-courant ajustable afin de régler un débit d'écoulement d'air de lavage à contre-courant efficace pour laver ledit micromédia (128) sans déstratifier ledit média.

6. Le filtre tel que défini dans la revendication 1, où la couche de dessus de micromédia (128) présente un diamètre effectif allant de 0,1 à 0,2 mm.

7. Le filtre tel que défini dans la revendication 1, où une densité de la couche intermédiaire (112) est d'environ 4 g/mL et une densité de la couche de dessus est inférieure à 3 g/mL, préférablement dans une matière en sable présentant une densité d'environ 2,7 g/mL ou dans une matière en verre présentant une densité d'environ 2,5 g/mL ou dans une matière en plastique présentant une densité d'environ 1,6 g/mL.

8. Le filtre tel que défini dans la revendication 1 ou la revendication 6, où la couche de dessous (114) comprend des granules de grenat.

9. Le filtre tel que défini dans n'importe laquelle des revendications 1 à 8, où le distributeur d'air de lavage à contre-courant comprend un conduit (152') entourant un tamis (116) de la sortie de liquide filtré (120).

10. Le filtre tel que défini dans n'importe laquelle des revendications 1 à 9, comprenant en sus une alimentation d'air de lavage à contre-courant contrôlée.

11. Le filtre tel que défini dans la revendication 10, où l'organe de contrôle contrôle automatiquement une pluralité de valves comprenant au moins la valve d'air afin d'effectuer un cycle de lavage à contre-courant par air sur le micromédia (128).
